# EUROPÄISCHE PATENTSCHRIFT

(11) **EP 2 542 946 B1**
(45) Veröffentlichungstag und Bekanntmachung des Hinweises auf die Patenterteilung: **19.06.2019**
(21) Anmeldenummer: 11703862.0
(22) Anmeldetag: 09.02.2011
(51) Int. Cl.: G05B 19/042, H04L 12/403, G05B 23/02, G05B 15/02

(54) **SCHALTSCHRANKÜBERWACHUNGSEINRICHTUNG**
CONTROL CABINET MONITORING DEVICE
ÉQUIPEMENT DE CONTRÔLE D'UNE ARMOIRE ÉLECTRIQUE

(30) Priorität: 01.03.2010 DE 102010009775
(43) Veröffentlichungstag der Anmeldung: 09.01.2013
(73) Patentinhaber: RITTAL GmbH & Co. KG, 35745 Herborn (DE)
(72) Erfinder: HAIN, Markus, 35684 Dillenburg (DE); ROSENTHAL, Daniel, 57072 Siegen (DE); PRINZ, Ulrich, 35781 Weilburg (DE)
(74) Vertreter: Angerhausen, Christoph
(86) Internationale Anmeldenummer: PCT/EP2011/051863
(87) Internationale Veröffentlichungsnummer: WO 2011/107332

(56) Entgegenhaltungen:
- WO-A2-98/36335
- DE-A1- 19 710 019

## Beschreibung

Die Erfindung bezieht sich auf eine Schaltschranküberwachungseinrichtung mit einer Steuereinrichtung, die über einen Feldbus mit verschiedenen Sensoren und/oder Aktoren zum Überwachen und Steuern unterschiedlicher Schaltschrankfunktionen, wie Klimatisierung, Feuchteregelung, Zugangskontrolle, verbunden ist.

Eine Schaltschranküberwachungseinrichtung dieser Art ist in der DE 199 11 824 C2 angegeben. Bei dieser bekannten Schaltschranküberwachungseinrichtung sind an einen Feldbus eine Basisüberwachungseinrichtung und mehrere Überwachungseinheiten angeschlossen, wobei die Basisüberwachungseinrichtung in erster Linie die Datenverarbeitung übernimmt und ein Datenaustausch über den Feldbus nur zwischen einer jeweiligen Überwachungseinheit und der Basisüberwachungseinrichtung vorgesehen ist. Die Basisüberwachungseinrichtung und die Basisüberwachungseinheiten sind ihrerseits mit Anschlussstellen für Sensoren und/oder Aktoren versehen, wobei in den Überwachungseinheiten schon eine Vorverarbeitung der Sensor- und Aktorsignale erfolgen kann. Die Zahl der angeschlossenen oder anschließbaren Sensoren und Aktoren ist auf die vorgegebene Anzahl der Anschlussstellen an der Basisüberwachungseinrichtung und den Überwachungseinheiten beschränkt.

Weitere Schaltschranküberwachungseinrichtungen mit Sensoren und Aktoren sind in der DE 197 10 019 C2, der DE 10 2006 011 127 A1, der DE 10 2005 002 314 A1, der DE 101 19 637 A1, der DE 100 07 271 und der DE 199 11 249 A1 gezeigt. Die DE 197 10 019 C2 nennt auch einen Feldbus. Dieser hängt mit einer Ausgabeschnittstelle zusammen, über die Informationssignale in verschiedener Form ausgegeben werden können.

Die WO98/36335 zeigt ein Prozesssteuerungssystem mit einer geschichteten Steuerungsstrategie und einer Aufteilung in eine Mehrzahl von Steuerungsgeräten. Dabei bildet ein Feldbus-Funktionsblock einen Grundbestandteil der Steuerungsstrukturen für verschiedene Gerätetypen. Ein automatisches Konfigurationsprogramm reagiert, wenn eine neue Steuerkomponente erfasst wird, und konfiguriert automatisch das Ein-/Ausgabe-Untersystem. Nach Anschluss eines Gerätes, wird dieses automatisch erfasst und konfiguriert. Es erfolgt eine automatische Anforderung zur Identifikation eines neu angeschlossenen Gerätes.

Der Erfindung liegt die Aufgabe zugrunde, eine Schaltschranküberwachungseinrichtung der eingangs genannten Art bereit zu stellen, mit der bei zuverlässiger Datenübertragung flexible Anpassungsmöglichkeiten an unterschiedliche Einsatzfälle von Schaltschränken oder Schaltschrankanordnungen geboten werden. Außerdem soll ein betreffendes Verfahren angegeben werden.

Diese Aufgabe wird mit den Merkmalen des Anspruches 1 bzw. des Anspruches 12 gelöst.

Bei der Vorrichtung ist vorgesehen, dass zumindest ein Teil der Sensoren und/oder Aktoren als Direktanschlusssensoren und/oder Direktanschlussaktoren mit jeweils eigenen Busankoppelschaltungen versehen und über diese an den Feldbus angekoppelt sind, dass die Steuereinrichtung eine Initialisiereinheit aufweist oder mit einer solchen verbindbar ist, über die die Direktanschlusssensoren und/oder die Direktanschlussaktoren vor ihrer Inbetriebnahme initialisierbar und dabei automatisch adressierbar sind und anschließend über die Steuereinrichtung auf der Basis individuell zugeordneter Adressen für ihren Betrieb in Datenaustauschverbindung gebracht sind, dass jeder Direktanschlusssensor und/oder Direktanschlussaktor sowie die Initialisiereinheit mit einer Freigabestufe versehen ist, dass zu Beginn der Initialisierung lediglich in der Initialisiereinheit mittels der Freigabestufe ein Freigabesignal eingeschaltet ist, das am ersten der an dem Feldbus angeschlossenen Direktanschlusssensoren oder Direktanschlussaktoren eingangsseitig erkennbar ist, während es von den nachfolgenden der am Feldbus anliegenden Direktanschlusssensoren und/oder Direktanschlussaktoren infolge nicht durchgeschalteter Freigabestufe des ersten Direktanschlusssensors und/oder Direktanschlussaktors nicht erkennbar ist, dass in diesem Zustand die Initialisierung des ersten Direktanschlusssensors und/oder Direktanschlussaktors unter Zuweisung seiner Adresse durch die Initialisiereinheit und Meldung seiner charakteristischen, in ihm gespeicherten Eigenschaftsdaten an die Initialisiereinheit durchführbar ist und im Anschluss an seine Initialisierung und erfolgter Anmeldung über seine Freigabestufe das Freigabesignal zu dem nachfolgenden Direktanschlusssensor oder Direktanschlussaktor durchschaltbar ist, wonach die Initialisierung des nachfolgenden und entsprechend der gegebenenfalls weiteren nachfolgenden Direktanschlusssensoren und/oder Direktanschlussaktoren sukzessive erfolgt und dass die Reihenfolge der Direktanschlusssensoren und/oder Direktanschlussaktoren in der Steuereinrichtung speicherbar ist.

Bei dem Verfahren ist vorgesehen, dass die Sensoren und/oder Aktoren als Direktanschlusssensoren und/oder Direktanschlussaktoren direkt an den Feldbus angeschlossen werden, dass zu Beginn der Initialisierung nur in der Initialisiereinheit ein Freigabesignal und ein Nicht-Initialisierungssignal in einen Spannungszustand gebracht werden, während Freigabesignale in den Direktanschlusssensoren und/oder den Direktanschlussaktoren nicht durchgeschaltet sind, dass ein erster der Direktanschlusssensoren oder Direktanschlussaktoren das Freigabesignal der Initialisiereinheit an seinem Eingang erkennt und einen Abschlusswiderstand anschaltet, dass anschließend zwischen der Initialisiereinheit und dem ersten Direktanschlusssensor oder Direktanschlussaktor Daten zur Initialisierung ausgetaucht werden, wobei dem ersten Direktanschlusssensor oder Direktanschussaktor von der Initialisiereinheit eine Adresse zugewiesen wird und von diesem charakteristische, in ihm gespeicherte Eigenschaftsdten an die Initialisiereinheit gemeldet werden, dass von der Initialisiereinheit entschieden wird, ob der erste Direktanschlusssensor oder Direktanschlussaktor einen normalen Betrieb an dem Feldbus aufnehmen darf und dieser gegebenenfalls angemeldet wird, dass der Direktanschlusssensor oder Direktanschlussaktor anschließend bei Aufnahme des Normalbetriebs eine Versorgung seiner Sensorik oder Aktorik einschaltet und das Freigabesignal zu dem an dem Feldbus nachfolgenden Direktanschlusssensor oder Direktanschlussaktor durchschaltet und das Nicht-Initialisierungssignal freigibt, wobei er erkennt, dass noch mindestens ein nachfolgender Direktanschlusssensor oder Direktanschlussaktor vorhanden ist dadurch, dass das Nicht-Initialisierungssignal auf einem anfänglichen Spannungsniveau, insbesondere Masse bleibt, und bei Feststellen des Vorhandenseins den Abschlusswiderstand selbsttätig wegschaltet, und dass die gegebenenfalls nächsten am Feldbus liegenden Direktanschlusssensoren und/oder Direktanschlussaktoren sukzessive in entsprechender Weise initialisiert werden und anschließend die Initialisierung beendet wird, wobei die erkannte Reihenfolge der am Feldbus angeschlossenen Direktanschlusssensoren und/oder Direktanschlussaktoren gespeichert wird.

Mit diesen Maßnahmen werden flexible Erweiterungsmöglichkelten der Schaltschranküberwachungseinrichtung geboten, wobei auch nachträglich Änderungen bzw. Ergänzungen vorgenommen werden können. Dabei wird bei einfachen Installationsmöglichkeiten eine sichere drahtgebundene Datenübertragung erreicht, die störungssicher aufgebaut ist, wobei auch unberechtigten Manipulationen vorgebeugt werden kann.

Eine vorteilhafte Ausgestaltung besteht darin, dass der Feldbus als CAN-Bus ausgebildet ist. Die damit erhaltene Busstruktur lässt flexible Konfigurierungsmöglichkeiten zu.

Ist vorgesehen, dass die Steuereinrichtung mindestens eine mit dem Feldbus gekoppelte oder koppelbare Zentraleinheit aufweist, über die eine Konfigurierung der initialisierten Direktanschlusssensoren und/oder Direktanschlussaktoren durchführbar ist, kann vorteilhaft mittels der Zentraleinheit eine Datenspeicherung, Datenverwaltung und Datenverarbeitung unter Auswertung der Überwachungsdaten bzw. Steuerungsdaten für Aktoren vorgenommen werden.

Zur flexiblen Anpassbarkeit an unterschiedliche Gegebenheiten tragen die Maßnahmen bei, dass die Direktanschlusssensoren und/oder Direktanschlussaktoren zu unterschiedlichen Funktionsblöcken kombinierbar sind, die mittels der Steuereinrichtung betreibbar sind.

Verschiedene Steuerungsmöglichkeiten z. B. mit aufgeteilter Datenverarbeitung, wobei unterschiedliche Schwerpunkte zugeteilt werden können, ergeben sich dadurch, dass der Feldbus multimasterfähig ausgebildet ist.

Eine vorteilhafte Ausgestaltung für den Aufbau und die Funktion besteht darin, dass die Initialisiereinheit Teil der Zentraleinheit ist und dass für die Initialisierung in der Initialisiereinheit ein Initialisierprogramm gespeichert ist.

Der Aufbau und die Inbetriebnahme bzw. Änderungen der Konfiguration werden dadurch begünstigt, dass der Feldbus neben zwei für den Normalbetrieb vorgesehene Betriebsdatenleitungen, zwei zusätzliche Signalleitungen für die Initialisierung besitzt.

Für die Funktion und den Aufbau sind des Weiteren die Maßnahmen von Vorteil, dass jeder Direktanschlusssensor und/oder Direktanschlussaktor eine Nicht-Initialisierungsstufe und einen zu- und abschaltbaren Abschlusswiderstand aufweist.

Mit den Maßnahmen, dass an den Feldbus weitere Busteilnehmer angeschlossen sind, wie mindestens eine Sensoranschlusseinheit, eine Buskoppeleinheit und eine weitere Zentraleinheit, werden weitere Ausbaumöglichkeiten der Schaltschranküberwachungseinrichtung geboten. Beispielsweise können mit diesen Maßnahmen auch vorhandene Sensoren bzw. Aktoren an den Feldbus angeschlossen werden und/oder der Feldbus kann mit übergeordneten Überwachungseinheiten und Bussystemen bzw. Netzen in Datenübertragungsverbindung gebracht werden.
Weitere vorteilhafte Ausgestaltungsmöglichkeiten der Schaltschranküberwachungseinrichtung ergeben sich dadurch, dass die Zentraleinheit mit weiteren Sensoren und/oder Aktoren versehen und/oder mit Anschlüssen zum Verbinden mit weiteren Sensoren und/oder Aktoren versehen ist.

Die Erfindung wird nachfolgend anhand von Ausführungsbeispielen unter Bezugnahme auf die Zeichnungen näher erläutert. Es zeigen:
- Fig. 1: eine schematische Blockdarstellung eines ersten Ausführungsbeispiels einer Schaltschranküberwachungseinrichtung mit einem Feldbus,
- Fig. 2: eine schematische Blockdarstellung eines weiteren Ausführungsbeispiels einer Schaltschranküberwachungseinrichtung mit Feldbusanordnung,
- Fig. 3: eine an den Feldbus nach den Fig. 1 und 2 anschließbare Eingabe-/Ausgabeeinheit in einem Blockbild,
- Fig. 4: eine Buskoppeleinheit in einem Blockbild und
- Fig. 5: eine schematische Darstellung eines Funktionsblocks.

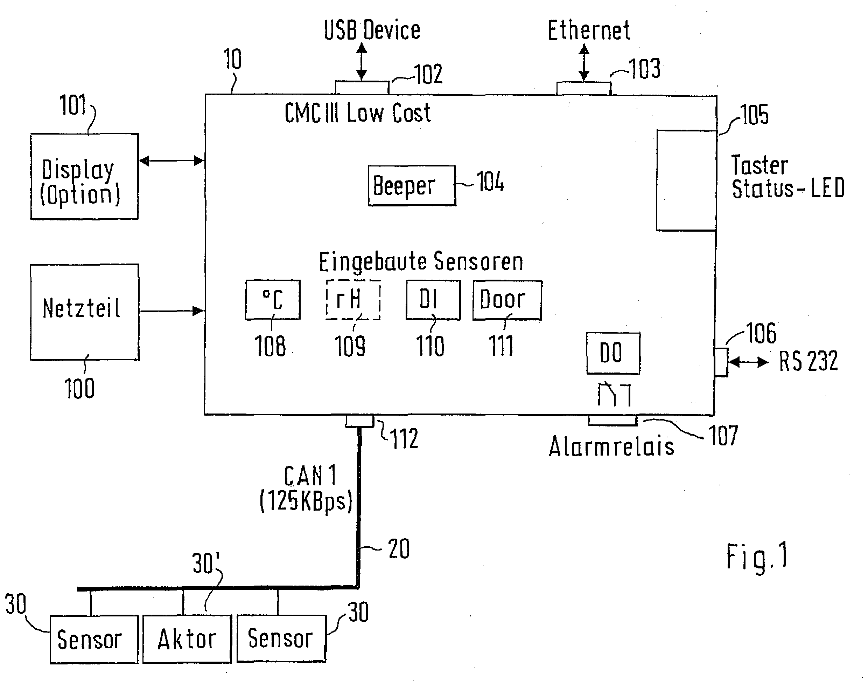

Fig. 1 zeigt ein erstes Ausführungsbeispiel einer Schaltschranküberwachungseinrichtung mit einer Zentraleinheit 10 und einem daran angeschlossenen Feldbus 20, der als CAN-Bus ausgebildet ist. Dieser ist multimasterfähig, d. h. mehrere Bus-Teilnehmer können als Master fungieren bzw. bestimmt werden.

Die Zentraleinheit 10, die Teil einer umfassenderen Steuereinrichtung ist oder sein kann, weist neben einer Feldbus-Schnittstelle 112, an die der Feldbus 20 angeschlossen ist, weitere Schnittstellen auf, wie eine weitere Anschlussstelle 106 für einen seriellen Bus (RS232) einen Relais-Anschluss 107 zum Nutzen von Relais-Funktionen für einen Anwender, eine universelle serielle Busschnittstelle 102 (USB) zum Anschluss von Geräten mit einer entsprechenden standardisierten Schnittstelle, eine Verbindungsstelle 103 für einen Ethernet-Anschluss bzw. einen Übergang zu einem übergeordneten Netzwerk, sowie Anschlussmöglichkeiten für eine Anzeigevorrichtung 101 und ein Netzteil 100 zur elektrischen Energieversorgung. Außerdem weist die Zentraleinheit 10, wie beispielhaft angegeben, einen Tongeber 104, Eingabe- und Anzeigeelemente 105, einen oder mehrere Temperatursensoren 108, einen oder mehrere Feuchtesensoren 109, einen Digitaleingang 110 und einen Türsensor 111 auf.

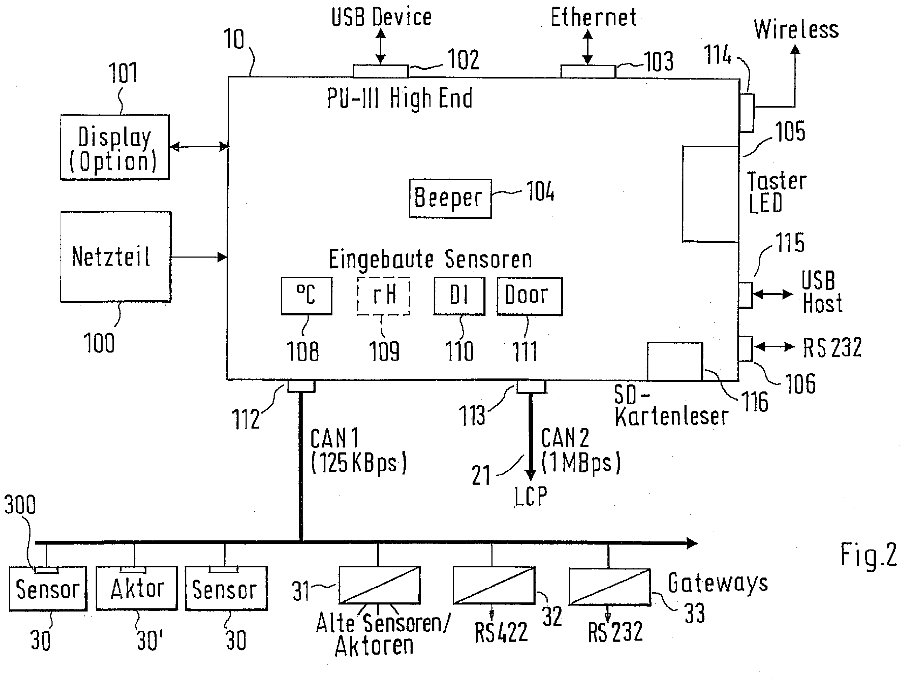

Wie aus Fig. 2 ersichtlich, kann die Zentraleinheit 10 mit weiteren Eigenschaften ausgestattet sein, wie einer weiteren Feldbus-Schnittstelle 113, einer weiteren universellen seriellen Busschnittstelle 115, einer drahtlosen Verbindungsstelle 114 z. B. mit einer Empfangs- und Sendeantenne für eine Funkübertragung, sowie einer Kartenlesereinheit 116 für den Zugang berechtigter Personen.

Als Sensoren kommen neben den genannten Temperatur- und Feuchtesensoren weitere Sensoren in Betracht, wie sie in den eingangs genannten Druckschriften angegeben sind. Beispielsweise kann es sich bei den Sensoren um Rauchsensoren, Vibrationssensoren (z. B. dreidimensionale Beschleunigungssensoren), Türpositionssensoren, Strom- und Spannungsmesssensoren, Sensoren für eine Personenidentifikation zur Zutrittskontrolle, Sensoren für Komponenten von Klimatisierungsvorrichtungen, wie Betriebsstundenzähler, Strömungsdetektoren und dgl. handeln, während bei den Aktoren solche für Schaltschranksteuerungsfunktionen in Betracht kommen, wie Komponenten von Klimatisierungsvorrichtungen wie Ventilatoren, Pumpen und dgl., Aktoren für Türverschlüsse, Anzeigen von Meldern und Alarmgebern und dgl.

Vorliegend sind Sensoren und Aktoren als Direktanschlusssensoren 30 bzw. Direktanschlussaktoren 30' zum unmittelbaren Anschluss an den Feldbus 20 oder den weiteren Feldbus 21 ausgebildet und besitzen dazu jeweilige Busankoppelschaltungen 300. Ferner besitzen die Direktanschlusssensoren 30 und Direktanschlussaktoren 30' eine jeweilige Freigabestufe (Enable), Nicht-Initialisierungsstufe (Not-Initialized) und einen Bus-Abschlusswiderstand, wobei mittels der Freigabestufe ein Freigabe-signal zu einem nächsten Busteilnehmer, insbesondere also einem nachfolgenden Direktanschlusssensor 30 oder Direktanschlussaktor 30', unterbrochen oder durch geschaltet werden kann, ein Nicht-Initialisierungssignal auf einem betreffenden Spannungsniveau gehalten oder von diesem heruntergeschaltet werden kann, insbesondere auf Masse gelegt werden kann und der Bus-Abschlusswiderstand über einen betreffenden Schalter zu- oder von dem Bus weggeschaltet werden kann.

Wie Fig. 2 weiter zeigt, können außer den Direktanschlusssensoren 30 bzw. Direktanschlussaktoren 30' an den betreffenden Feldbus 20 (und entsprechend auch den Feldbus 21) als weitere Busteilnehmer eine Sensoranschlusseinheit 31 mit Anschlussstellen für weitere Sensoren und/oder Aktoren insbesondere herkömmlicher Art über angepasste Anschlussstellen, wobei diese Sensoren und/oder Aktoren über Codeschaltungen etwa mit Widerständen erkennbar sind, oder Koppeleinheiten 32 für mit seriellen Busschnittstellen ausgerüstete Geräte (RS422) angeschlossen sein. Über die weitere Koppeleinheit 33 kann z. B. eine Verbindung mit einem anderen Bus nach Art einer Gateway-Funktion vorgenommen werden.

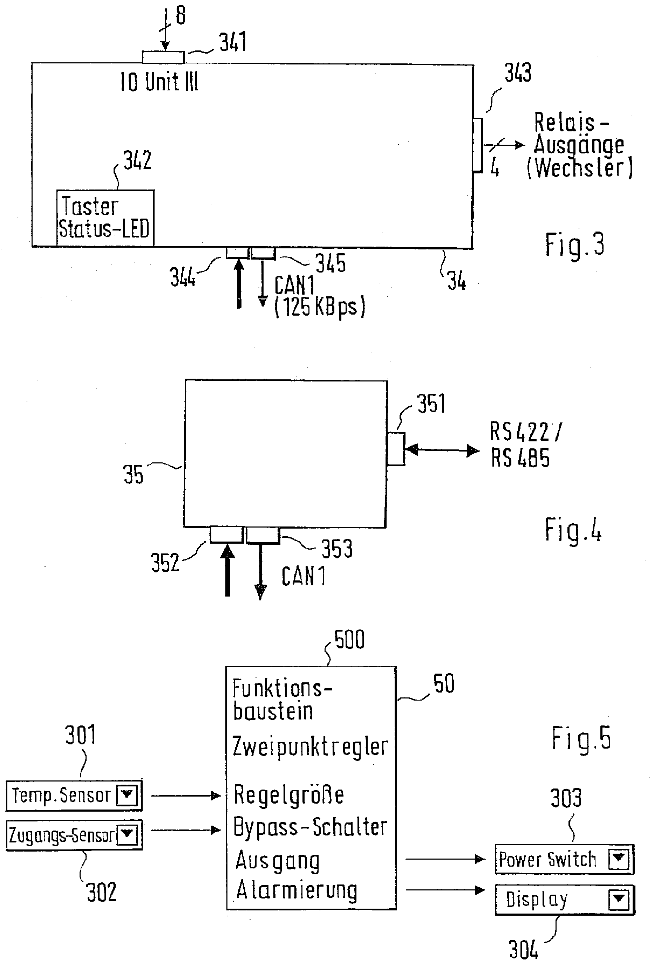

Entsprechend kann auch eine in Fig. 3 gezeigte Eingabe-/Ausgabeeinheit 34 als weiterer Teilnehmer an den Feldbus 20 bzw. 21 angekoppelt werden, und zwar über Anschlüsse 344 (Eingang) und 345 (Ausgang). Die Eingabe-/Ausgabeeinheit 34 weist vorliegend weiterhin Relais-Ausgänge 343 sowie Taster und Status-Leuchtdioden 342 und eine Anschlussstelle 341 für anzuschließende Komponenten bzw. Geräte auf.

Ähnlich wie die weitere Koppeleinheit 33 kann mittels einer in Fig. 4 gezeigten Buskoppeleinheit 35 eine Verbindung zu einem anderen Bus hergestellt werden, wobei der Anschluss an den vorliegenden Feldbus über einen Eingangsanschluss 352 und einen Ausgangsanschluss 353 erfolgt und weitere Anschlussmöglichkeiten über eine Koppelstelle 351 an einen seriellen Bus (RS422/RS485) bestehen.

Fig. 5 zeigt einen Funktionsblock 50, der über eine Gruppensteuerung 500 mehrere Teilnehmer, beispielsweise einen Temperatursensor 301, einen Zugangssensor 302 sowie einen Leistungsschalter 303 und eine Anzeige 304, die an den Feldbus angeschlossen sind, miteinander verbinden kann. Dabei ist die Kombinierbarkeit der Busteilnehmer flexibel ausgestaltet, um eine Anpassung an unterschiedliche Einsatzbedingungen und wechselnde Einflüsse vornehmen zu können. Die Kombination kann dabei beispielsweise über eine dynamische Oberfläche erfolgen, die an die Steuereinrichtung, beispielsweise über die Zentraleinheit 10, angeschlossen ist. Die dynamische Oberfläche kann sich dabei entfernt von der örtlichen Schaltschranküberwachungseinrichtung befinden und z. B. über ein übergeordnetes Netz in Datenübertragungsverbindung gebracht sein. Die Sensoren und Aktoren bzw. die Direktanschlusssensoren 30 und Direktanschlussaktoren 30' sowie gegebenenfalls weiteren Bus-Teilnehmer können dabei über die dynamische Weboberfläche zusammengeschaltet werden, wobei die Funktionsblöcke Eingänge aufweisen, an die die Sensoren, insbesondere auch die Direktanschlusssensoren 30, anschließbar sind, und weisen ferner Ausgänge auf, über die die Aktoren, insbesondere auch die Direktanschlussaktoren 30', angeschlossen werden können. Das in Fig. 5 gezeigte Ausführungsbeispiel eines Funktionsblocks 50 bezieht sich etwa auf eine Klimatisierungsfunktion. Vorteilhaft bei einer multimasterfähigen Bustechnologie können die Busteilnehmer untereinander die komplette Funktionalität eines Funktionsblockes übernehmen, indem z. B. der Versorgungsschalter 303 bzw. Leistungsschalter sämtliche Bedingungen, unter denen er schalten soll, selber kennt. Er ist dann so ausgebildet, dass er Statusinformationen der anderen Busteilnehmer mit auswerten und selbstständig entscheiden kann, wenn ein Schaltzustand erreicht ist. Dann würde z. B. die Zentraleinheit 10 nur die Funktion der Konfigurierung und evtl. Ankopplung an ein übergeordnetes Netz (wie Ethernet) übernehmen. Einmal konfiguriert, kann dann der Funktionsblock ohne die Zentraleinheit 10 selbstständig arbeiten als eigenständiger Teil der Steuereinrichtung. Die Konfigurierung ermöglicht die Einbindung verschiedener Bus-Teilnehmer und deren Einstellungen, wie Vorgabewerte bzw. Sollwerte.

Bei einem anderen Aufbau der Schaltschranküberwachungseinrichtung kann eine weitere Zentraleinheit vorgesehen sein, so dass durch Redundanz erweiterte Überwachungs- und Steuerungsmöglichkeiten z. B. für eine schnelle Alarmierung gegenüber einem übergeordneten Überwachungssystem gebildet wird.

Durch die Ausbildung der Schaltschranküberwachungseinrichtung mit den Direktanschlusssensoren 30 und Direktanschlussaktoren 30' ist die Anzahl der möglichen Sensoren bzw. Aktoren nicht auf eine vorgegebene Anzahl von Anschussbuchsen an Anschlusseinheiten beschränkt, sondern flexibel durch die Software bestimmbar und erweiterbar. Durch die Adressierung der Busteilnehmer, insbesondere der Direktanschlusssensoren 30 und/oder Direktanschlussaktoren 30' werden diese eindeutig erkannt. Vorliegend besteht eine besondere Ausbildung zudem darin, dass durch die Initialisierung des Bussystems mit den Teilnehmern auch deren Einbauposition erkannt wird und nach einer Neukonfigurierung durch Ergänzung von Bus-Teilnehmern, Austausch oder Verringerung der Anzahl, eine neue Initialisierung vorzugsweise automatisch ausgelöst wird. Hierzu wird bei jedem Einschalten der Schaltschranküberwachungseinrichtung nach Abschalten der Versorgung oder auch bei einer Änderung der Hardwarekomponenten während eines laufenden Betriebs eine Initialisierung durchgeführt.

Alle Bus-Teilnehmer, insbesondere auch die Direktanschlusssensoren 30 und Direktanschlussaktoren 30' sind mit zwei Bus-Anschlüssen ausgerüstet, einem Eingang und einem Ausgang. Vorteilhaft wird bei einer Gesamtstromaufnahme von z. B. mehr als 10 mA auf der Primärseite (bei einer Versorgungsspannung von 24 V Gleichspannung) der eigentliche Sensor bzw. Aktor spannungsmäßig geschaltet, um sicherzustellen, dass eine Bus-Anmeldung durchgeführt werden kann, ohne dass die von der Steuereinrichtung, insbesondere der Zentraleinheit 10 zur Verfügung stehende Maximal-Leistung überschritten wird. Erst nach Freigabe durch die Steuereinrichtung, insbesondere die Zentraleinheit 10, wird der eigentliche Sensor bzw. Aktor mit höherem Energieverbrauch aktiviert, um seine Sensorfunktion bzw. Aktorfunktion aufzunehmen. Pro Teilnehmer ist der Abschlusswiderstand zuschaltbar oder wegschaltbar.

Um eine automatische Adressierung der Teilnehmer, insbesondere der Direktanschlusssensoren 30 und/oder der Direktanschlussaktoren 30' zu ermöglichen, werden über einen Freigabe-Anschluss das Freigabesignal und über einen Nicht-Initialisierungs-Anschluss das Nicht-Initialisierungssignal verwendet. Auch eine Veränderung der Buskonfiguration (z. B. bei Aufnahme eines neuen Bus-Teilnehmers) wird über diese Signal-Anschlüsse gemeldet Jeder Bus-Teilnehmer hat die Möglichkeit, die dem Freigabe-Signal zugeordnete Freigabe-Signalleitung zum nächstfolgenden Bus-Teilnehmer durch einen aktiv ansteuerbaren Schalter zu unterbrechen. Zusätzlich kann das Freigabe-Signal auf Masse geschaltet werden. Diese Schaltfunktion muss in Richtung der Zentraleinheit 10, bzw. einer Initialisiereinheit der Steuereinrichtung (die in der Zentraleinheit 10 ausgebildet sein kann) erfolgen können. Da nicht zwingend vorgegeben ist, an welcher Seite des Bus-Teilnehmers der Eingang und der Ausgang liegen, ist vorteilhaft vorgesehen, dass das Schalten auf Masse auf beiden Seiten des zur Unterbrechung dienenden Schalters erfolgen kann. Auch die Nicht-Initialisierungs-Signalleitung kann durch den Bus-Teilnehmer auf Masse geschaltet werden. Es ist vorgesehen, dass diese Signalleitungen bei Rücksetzen bzw. rückgesetztem Bus-Teilnehmer nicht beeinflusst werden. Das Freigabe-Signal dient dazu, während eines Initialisierungsvorgangs die Bus-Teilnehmer sequentiell in Betrieb zu nehmen. Nach Abschluss der Initialisierung wird die Freigabe-Signalleitung zu einer Art Kabelbruch-Erkennung genutzt. Dazu erhält der letzte Bus-Teilnehmer von der Initialisiereinheit den Befehl, das Freigabe-Signal auf Niedrigpegel zu ziehen. Damit ist eine Überwachung der Busverbindung möglich. Das Nicht-Initialisierungssignal dient dazu, den hinten im Bus liegenden Teilnehmern die Möglichkeit zu bieten, ihre Anwesenheit nach vorne zu melden.

Nachfolgend wird ein Ausführungsbeispiel für die Initialisierung von Direktanschlusssensoren 30 und/oder Direktanschlussaktoren 30' näher erläutert. Die Initialisiereinheit weist einen Hochzieh-Widerstand zum Anheben der Spannung des Freigabe-Signals und des Nicht-Initialisierungssignals z. B. auf das Niveau der Versorgungsspannung auf. Die Signalpegel des Freigabe-Signals und des Nicht-Initialisierungssignals werden vorzugsweise analog ausgewertet, da davon ausgegangen wird, dass der Niedrig-Pegel aufgrund von Übergangswiderständen auf der Länge der Busleitung rein digital evtl. nicht sicher auswertbar ist.

Zunächst sind die Direktanschlusssensoren 30 bzw. Direktanschlussaktoren 30' noch nicht initialisiert.
Die Initialisiereinheit schaltet die Spannungsversorgung zum Feldbus 20 ein.

Jeder Bus-Teilnehmer, vorliegend z. B. die Direktanschlusssensoren 30 und/oder die Direktanschlussaktoren 30', befindet sich beim Hochlaufen in einem nicht-initialisierten Zustand und trennt durch einen aktiv anzusteuernden Schalter das Freigabe-Signal auf und zieht das Nicht-Initialisierungssignal auf Masse. Der Bus-Abschlusswiderstand ist standardmäßig abgeschaltet. Im nicht-initialisierten Zustand ist dem betreffenden Direktanschlusssensor 30 bzw. Direktanschlussaktor 30' keine Kommunikation erlaubt außer zur Initialisierung, wie nachfolgend beschrieben.

Die Initialisiereinheit schaltet das Freigabe-Signal und das Nicht-Initialisierungssignal über den Hochzieh-Widerstand auf das Niveau der Versorgungsspannung. Der Hochzieh-Widerstand kann auch dauerhaft aktiv sein.

Der erste Direktanschlusssenor 30 bzw. Direktanschlussaktor 30' am Feldbus 20 startet und sieht das Freigabe-Signal am Eingang. Er schaltet den Bus-Abschlusswiderstand aktiv. Da das Freigabe-Signal zu den nachfolgenden Bus-Teilnehmern unterbrochen ist, ist er der einzige nicht-initialisierte Teilnehmer am Feldbus 20 mit vorhandenem Freigabe-Signal. In diesem Zustand können die Initialisiereinheit und der betreffende Direktanschlusssensor 30 bzw. Direktanschlussaktor 30' (oder gegebenenfalls ein anderer Bus-Teilnehmer) die notwendigen Daten zur Initialisierung austauschen. Die Initialisiereinheit weist dem betreffenden Bus-Teilnehmer eine Adresse zu. Außerdem meidet der Bus-Teilnehmer im Rahmen der Initialisierung seine Typeigenschaften, vorliegend also des Sensortyps oder des Aktortyps, die Seriennummer, etc. sowie die maximale Leistungsaufnahme an die Initialisiereinheit. Die Initialisiereinheit entscheidet, ob der in Rede stehende Bus-Teilnehmer seinen Betrieb aufnehmen darf oder nicht. Der Busteilnehmer wird gegebenenfalls angemeldet, im Anschluss daran nimmt er nach Freigabe durch die Initialisiereinheit seinen Normalbetrieb auf und schaltet dazu z. B. die Versorgung seiner eigenen Sensorik ein.

Außerdem wird nach Abschluss der Initialisierung die Freigabe-Leitung zum nachfolgenden Bus-Teilnehmer durchgeschaltet und das Nicht-Initialisierungssignal freigegeben. Bleibt das Nicht-Initialisierungssignal auf Niedrig-Pegel, weiß der Bus-Teilnehmer, dass noch mindestens ein weiterer uninitialisierter Teilnehmer am Bus hängt und schaltet daher den Bus-Abschlusswiderstand selbstständig weg. Vorteilhaft wird konzeptionell geprüft, ob durch den sequentiellen Ablauf der Initialisierung in jedem Fall sichergestellt ist, dass der nächste uninitialisierte Bus-Teilnehmer tatsächlich weiterhin am Feldbus 20 liegt. Die nächsten am Feldbus 20 verfügbaren Teilnehmer werden nacheinander auf gleiche Weise angemeldet.

Sind alle Bus-Teilnehmer initialisiert, erkennt dies die Initialisiereinheit daran, dass das Nicht-Initialisierungssignal auf den Pegel der Versorgungsspannung wechselt. Daraufhin wird die Initialisierungsphase beendet und der letzte Teilnehmer in der Kette angewiesen, das Freigabe-Signal auf Niedrig-Pegel zu ziehen.

Wenn sich im laufenden Betrieb ein Zustand ergibt, dass das Freigabe-Signal auf der Seite der Initialisiereinheit auf den Pegel der Versorgungsspannung wechselt (Kabelbruch), oder das Nicht-Initialisierungssignal auf Niedrig-Pegel wechselt (z. B. bei Anschaltung eines neuen Sensors), wird die vollständige Versorgung des Busses kurzzeitig unterbrochen, um bei allen Bus-Teilnehmern einen Rücksetzvorgang (Reset) auszulösen, und eine Neu-Initialisierung gestartet.

Jeder Bus-Teilnehmer speichert die genaue Identifizierung der Initialisiereinheit, an der er sich angemeldet hat, um während der Initialisierung feststellen zu können, ob sich an der Konfiguration etwas geändert hat. Diese Information ist wichtig für die Initialisiereinheit und eine übergeordnete Auswertung.

Über die beschriebene Art der Anmeldung wird eine automatisch ablaufende Adressierung der Bus-Teilnehmer umgesetzt, außerdem sind die Einbaupositionen durch die Reihenfolge der Bus-Teilnehmer bzw. Direktanschlusssensoren 30 und/oder Direktanschlussaktoren 30' am Feldbus 20 bestimmbar.

Die Initialisierung wird immer nach Einschalten der Versorgungsspannung durchgeführt. Dadurch werden Konfigurationsänderungen, die im ausgeschalteten Zustand durchgeführt werden, erkannt.

Immer wenn im laufenden Betrieb ein Bus-Teilnehmer bzw. Direktanschlusssensor 30 oder Direktanschlussaktor 30' zugefügt oder entfernt wird, wobei beim Entfernen der Feldbus 20 kurzzeitig unterbrochen wird und daher die nachfolgenden Teilnehmer in den uninitialisierten Zustand wechseln, kann die Initialisiereinheit anhand des Nicht-Initialisierungssignals die Notwendigkeit einer Neu-Initialisierung erkennen.

Jede fallende Flanke des Nicht-Initialisierungssignals wird mit einer Neuinitialisierung behandelt, um einen Eingriff in den Feldbus 20 bei laufendem Initialisierungsvorgang korrekt behandeln zu können.

Parallel zu der für die Kommunikation verwendeten Adressierung wird von jedem Bus-Teilnehmer eine logische Adresse verwaltet, die vom Anwender beeinflusst werden kann. Damit wird sichergestellt, dass z. B. bei Änderung der Reihenfolge der Verdrahtung die übergeordnete Konfiguration nicht angepasst werden muss.

Für die Durchführung der Initialisierung ist ein Aufbau des Feldbusses 20 von Vorteil, bei dem zusätzlich zu den während des Normalbetriebs verwendeten beiden Adern der Buslinie zwei weitere Adern für den Initialisierungsvorgang verwendet werden.

Die beschriebene Schaltschranküberwachungseinrichtung bietet flexible Anpassungsmöglichkeiten an unterschiedliche Einsatzzwecke von Schaltschränken bei zuverlässiger Funktionsweise und bedienerfreundlicher Installation.

## Patentansprüche

1. Anordnung für die Schaltschranküberwachung, mit einer Steuereinrichtung, die über einen Feldbus (20) mit verschiedenen Sensoren und/oder Aktoren zum Überwachen und Steuern unterschiedlicher Schaltschrankfunktionen, wie Klimatisierung, Feuchteregelung, Zugangskontrolle, verbunden ist,
**dadurch gekennzeichnet,**
**dass** die Sensoren und/oder Aktoren als Direktanschlusssensoren (30) und/oder Direktanschlussaktoren (30') mit jeweils eigenen Busankoppelschaltungen (300) versehen und über diese an den Feldbus (20) angekoppelt sind,
**dass** die Steuereinrichtung eine Initialisiereinheit aufweist oder mit einer solchen verbunden ist, über die die Direktanschlusssensoren (30) und/oder die Direktanschlussaktoren (30') vor ihrer Inbetriebnahme initialisierbar und dabei automatisch adressierbar sind und anschließend über die Steuereinrichtung auf der Basis individuell zugeordneter Adressen für ihren Betrieb in Datenaustauschverbindung gebracht sind,
**dass** jeder Direktanschlusssensor (30) und/oder Direktanschlussaktor (30') sowie die Initialisiereinheit mit einer Freigabestufe versehen ist,
**dass** zu Beginn der Initialisierung lediglich in der Initialisiereinheit mittels der Freigabestufe ein Freigabesignal und ein Nicht-Initialisierungssignal eingeschaltet sind, wobei das Freigabesignal am ersten der an dem Feldbus angeschlossenen Direktanschlusssensoren (30) oder Direktanschlussaktoren (30') eingangsseitig erkennbar ist, während es von den nachfolgenden der am Feldbus anliegenden Direktanschlusssensoren (30) und/oder Direktanschlussaktoren (30') infolge nicht durchgeschalteter Freigabestufe des ersten Direktanschlusssensors (30) und/oder Direktanschlussaktors (30') nicht erkennbar ist,
**dass** in diesem Zustand die Initialisierung des ersten Direktanschlusssensors (30) und/oder Direktanschlussaktors (30') unter Zuweisung seiner Adresse durch die Initialisiereinheit und Meldung seiner charakteristischen, in ihm gespeicherten Eigenschaftsdaten an die Initialisiereinheit durchführbar ist und der Direktanschlusssensor (30) oder Direktanschlussaktor (30') dabei einen Abschlusswiderstand anschaltet, wobei im Anschluss an seine Initialisierung und erfolgter Anmeldung über seine Freigabestufe das Freigabesignal zu dem nachfolgenden Direktanschlusssensor (30) oder Direktanschlussaktor (30') durchschaltbar ist, wonach die Initialisierung des nachfolgenden und entsprechend der gegebenenfalls weiteren nachfolgenden Direktanschlusssensoren (30) und/oder Direktanschlussaktoren (30') sukzessive erfolgt, solange das Nicht-Initialisierungssignal auf einem anfänglichen Spannungsniveau, insbesondere Masse bleibt, wobei es bei Feststellen des Vorhandenseins den Abschlusswiderstand selbsttätig wegschaltet, und
**dass** die Reihenfolge der Direktanschlusssensoren (30) und/oder Direktanschlussaktoren (30') in der Steuereinrichtung speicherbar ist.

2. Anordnung nach Anspruch 1 ,**dadurch gekennzeichnet, dass** der Feldbus als CAN-Bus ausgebildet ist

3. Anordnung nach Anspruch 1 oder 2, **dadurch gekennzeichnet, dass** die Steuereinrichtung mindestens eine mit dem Feldbus gekoppelte oder koppelbare Zentraleinheit (10) aufweist, über die eine Konfigurierung der initialisierten Direktanschlusssensoren (30) und/oder Direktanschlussaktoren (30') durchführbar ist.

4. Anordnung nach einem der vorhergehenden Ansprüche, **dadurch gekennzeichnet, dass** die Direktanschlusssensoren (30) und/oder Direktanschlussaktoren (30') zu unterschiedlichen Funktionsblöcken (50) kombinierbar sind, die mittels der Steuereinrichtung betreibbar sind.

5. Anordnung nach einem der vorhergehenden Ansprüche, **dadurch gekennzeichnet, dass** der Feldbus multimasterfähig ausgebildet ist.

6. Anordnung nach einem der Ansprüche 3 bis 5, **dadurch gekennzeichnet, dass** die Initialisiereinheit Teil der Zentraleinheit ist und dass für die Initialisierung in der Initialisiereinheit ein Initialisierprogramm gespeichert ist.

7. Anordnung nach einem der vorhergehenden Ansprüche, **dadurch gekennzeichnet, dass** der Feldbus neben zwei für den Normalbetrieb vorgesehenen Betriebsdatenleitungen, zwei zusätzliche Signalleitungen für die Initialisierung besitzt.

8. Anordnung nach einem der vorhergehenden Ansprüche, **dadurch gekennzeichnet, dass** jeder Direktanschlusssensor (30) und/oder Direktanschlussaktor (30') eine Nicht-Initialisierungsstufe und einen zu- und abschaltbaren Abschlusswiderstand aufweist.

9. Anordnung nach einem der vorhergehenden Ansprüche, **dadurch gekennzeichnet, dass** an den Feldbus weitere Busteilnehmer angeschlossen sind, wie mindestens eine Sensoranschlusseinheit (31), eine Buskoppeleinheit (35) und/oder eine weitere Zentraleinheit.

10. Anordnung nach einem der Ansprüche 3 bis 9, **dadurch gekennzeichnet, dass** die Zentraleinheit mit weiteren Sensoren und/oder Aktoren versehen und/ oder mit Anschlüssen zum Verbinden mit weiteren Sensoren und/oder Aktoren versehen ist.

## Claims

1. An arrangement for monitoring a cabinet, comprising a control device which is connected via a field bus (20) to various sensors and/or actuators for monitoring and controlling various control cabinet functions, such as climate control, moisture control, access control,
**characterized in that**
the sensors and or actuators are direct connection sensors (30) and/or direct connection actuators (30'), each having dedicated c bus coupling circuits (300) and being coupled by same to the field bus (20),
that the control device comprises an initialization unit or is connected to such a unit, via which the direct connection sensors (30) and/or the direct connection actuators (30') can be initialized before startup and automatically addressed thereby and are subsequently connected via the control device for the exchange of data for operating purposes on the basis of individually allocated addresses,
that each of said direct connection sensors (30) and/or direct connection actuators (30') as well as the initialization unit are provided with an enabling stage,
that at the beginning of the initialization an enabling signal and a non-initializing signal is on merely in the initialization unit by means of the enabling stage, which enabling signal can be recognized at the input side of the first one of said direct connection sensors (30) or direct connection actuators (30') coupled to the field bus, while it cannot be recognized by succeeding direct connection sensors (30) and/or direct connection actuators (30') coupled to the field bus due to the not switchedthrough enabling stage of said first direct connection sensor (30) and/or direct connection actuator (30'),
that in this state the initialization of said first direct connection sensor (30) and/or direct connection actuator (30') can be accomplished with allocation of its address by the initialization unit and notification of its specific characteristic data stored therein to the initialization unit and the direct connection sensor (30) and/or direct connection actuator (30') switches on a terminating resistor, wherein subsequent to its initialization and successful registration via its enabling stage the enabling signal can be connected to the succeeding direct connection sensor (30) or direct connection actuator (30'), whereupon the initialization of the succeeding and correspondingly the respective further succeeding direct connection sensors (30) and/or direct connection actuators (30') is accomplished successively, as long as the non-initializing signal remains at an initial voltage level, in particular ground level, wherein it automatically switches off the terminating resistor when detecting its presence and
that the order of direct connection sensors (30) and/or direct connection actuators (30') can be stored in said control device.

2. The arrangement of claim 1, **characterized in that** the field bus is configured as a CAN bus.

3. The arrangement of claim 1 or 2, **characterized in that** the control device comprises at least one central unit (10) which is coupled or can be coupled to the field bus, by which unit a configuration of the initialized direct connection sensors and/or direct connection actuators (30') can be accomplished.

4. The arrangement of any of the preceding claims, **characterized in that** the direct connection sensors (30) and/or direct connection actuators (30') can be combined to form different function blocks (50) operable by the control device.

5. The arrangement of any of the preceding claims, **characterized in that** the field bus is multimaster capable.

6. The arrangement of any of claims 3 to 5, **characterized in that** the initializing unit is part of the central unit and for initialization an initialization program is stored in said initialization unit.

7. The arrangement of any of the preceding claims, **characterized in that** the field bus, in addition to two operating data lines provided for normal operation, possesses two supplemental signal lines for initialization.

8. A The arrangement of any of the preceding claims, **characterized in that** each direct connection sensor (30) and/or direct connection actuator (30') comprises a non-initialization stage and a terminal resistor which can be switched on and off.

9. The arrangement of any of the preceding claims, **characterized in that** further bus users are connected to the field bus, such as at least one sensor connecting unit (31), one bus coupling unit (35) and/or a further central unit.

10. The arrangement of any of claims 3 to 9, **characterized in that** the central unit is provided with further sensors and/or actuators and/or with terminals for connecting further sensors and/or actuators.

## Revendications

1. Ensemble destiné à la surveillance d'une armoire électrique, avec un équipement de commande qui est raccordé à différents capteurs et/ou actionneurs par le biais d'un bus de données (20) pour la surveillance et la commande de différentes fonctions d'armoire électrique telles que la climatisation, la régulation de l'humidité, le contrôle d'accès,
**caractérisé en ce que**,
en tant que capteurs à connexion directe (30) et/ou actionneurs à connexion directe (30'), les capteurs et/ou actionneurs sont munis respectivement de propres circuits de couplage bus (300) et sont couplés par le biais de ceux-ci au bus de terrain (20),
**en ce que** l'équipement de commande comporte une unité d'initialisation ou est raccordé à une telle unité, par le biais de laquelle les capteurs à connexion directe (30) et/ou les actionneurs à connexion directe (30') peuvent être initialisés avant leur mise en marche et peuvent à cette occasion être adressés automatiquement et sont ensuite amenés en liaison d'échange de données pour leur fonctionnement par le biais de l'équipement de commande sur la base d'adresses affectées individuellement,
**en ce que** chaque capteur à connexion directe (30) et/ou actionneur à connexion directe (30') ainsi que l'unité d'initialisation sont munis d'un étage de validation,
**en ce que**, au début de l'initialisation, uniquement dans l'unité d'initialisation, un signal de validation et un signal de non-validation sont activés au moyen de l'étage de validation, le signal de validation pouvant être détecté côté entrée sur le premier des capteurs à connexion directe (30) ou actionneurs à connexion directe (30') connectés au bus de terrain tandis qu'il ne peut pas être détecté par les capteurs à connexion directe (30) et/ou actionneurs à connexion directe (30') suivants contigus au bus de terrain en raison de la non-connexion de l'étage de validation du premier capteur à connexion directe (30) et/ou actionneur à connexion directe (30'),
**en ce que**, dans cet état, l'initialisation du premier capteur à connexion directe (30) et/ou actionneur à connexion directe (30') peut être réalisée avec l'attribution de son adresse par l'unité d'initialisation et la communication à l'unité d'initialisation de ses données de propriété caractéristiques qu'il garde en mémoire, et le capteur à connexion directe (30) ou actionneur à connexion directe (30') active à cette occasion une résistance terminale, le signal de validation pouvant être branché sur le capteur à connexion directe (30) ou actionneur à connexion directe (30') suivant à la suite de son initialisation et de l'inscription réussie par le biais de son étage de validation, après quoi l'initialisation du capteur à connexion directe (30) et/ou de l'actionneur à connexion directe (30') suivant, et en conséquence des éventuels autres capteurs à connexion directe et/ou actionneurs à connexion directe suivants, s'effectue de façon successive tant que le signal de non-validation demeure à un niveau de tension initial, en particulier une masse, le signal de non-validation désactivant automatiquement la résistance terminale lors de la constatation de la présence, et
**en ce que** l'ordre de succession des capteurs à connexion directe (30) et/ou actionneurs à connexion directe (30') peut être enregistré dans l'équipement de commande.

2. Ensemble selon la revendication 1, **caractérisé en ce que** le bus de terrain est constitué en tant que bus CAN.

3. Ensemble selon la revendication 1 ou 2, **caractérisé en ce que** l'équipement de commande comporte au moins une unité centrale (10), couplée ou pouvant être couplée au bus de terrain, par le biais de laquelle une configuration des capteurs à connexion directe (30) et/ou actionneurs à connexion directe (30') initialisés peut être réalisée.

4. Ensemble selon l'une des revendications précédentes, **caractérisé en ce que** les capteurs à connexion directe (30) et/ou actionneurs à connexion directe (30') peuvent être combinés en différents blocs fonctionnels (50) qui peuvent être mis en oeuvre au moyen de l'équipement de commande.

5. Ensemble selon l'une des revendications précédentes, **caractérisé en ce que** le bus de terrain est constitué de façon multi-maîtrisable.

6. Ensemble selon l'une des revendications 3 à 5, **caractérisé en ce que** l'unité d'initialisation fait partie de l'unité centrale, et **en ce qu'**un programme d'initialisation est enregistré pour l'initialisation dans l'unité d'initialisation.

7. Ensemble selon l'une des revendications précédentes, **caractérisé en ce que**, outre deux lignes de données fonctionnement prévues pour le fonctionnement normal, le bus de terrain possède deux lignes de signalisation supplémentaires pour l'initialisation.

8. Ensemble selon l'une des revendications précédentes, **caractérisé en ce que** chaque capteur à connexion directe (30) et/ou actionneur à connexion directe (30') comporte un étage de non-initialisation et une résistance terminale pouvant être activée et désactivée.

9. Ensemble selon l'une des revendications précédentes, **caractérisé en ce que** d'autres participants au bus sont connectés au bus de données, tels qu'au moins une unité de connexion de capteur (31), une unité de couplage de bus (35) et/ou une autre unité centrale.

10. Ensemble selon l'une des revendications 3 à 9, **caractérisé en ce que** l'unité centrale est munie d'autres capteurs et/ou actionneurs et/ou est munie de connexions pour le raccordement à d'autres capteurs et/ou actionneurs.
